(19) Europäisches Patentamt
European Patent Office
Office européen des brevets

(11) **EP 4 406 985 A1**

## (12) EUROPEAN PATENT APPLICATION

(43) Date of publication:
**31.07.2024 Bulletin 2024/31**

(21) Application number: **23153989.1**

(22) Date of filing: **30.01.2023**

(51) International Patent Classification (IPC):
*C08G 18/08* (2006.01)     *C08G 18/24* (2006.01)
*C08G 18/64* (2006.01)     *C08G 18/79* (2006.01)
*C09J 175/04* (2006.01)     *C08G 18/32* (2006.01)

(52) Cooperative Patent Classification (CPC):
**C08G 18/6492; C08G 18/0852; C08G 18/244;
C08G 18/3218; C08G 18/6484; C08G 18/792;
C09J 175/04**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **VITO NV
2400 Mol (BE)**

(72) Inventors:
• **WROBLEWSKA, Aleksandra Alicja
2400 Mol (BE)**
• **FALIREAS, Panagiotis
2400 Mol (BE)**
• **VANBROEKHOVEN, Karolien
2400 Mol (BE)**
• **VENDAMME, Richard
2400 Mol (BE)**

(74) Representative: **Arnold & Siedsma
Bezuidenhoutseweg 57
2594 AC The Hague (NL)**

## (54) POLYURETHANE SYSTEM, POLYURETHANE POLYMER AND ADHESIVE THEREOF

(57)  The present invention relates to the field of polyurethanes, in particular, to a multicomponent polyurethane system comprising lignin, a polyurethane polymer and an adhesive thereof.

**EP 4 406 985 A1**

**Description**

FIELD OF THE INVENTION

The present invention relates to the field of polyurethanes, in particular, to a multicomponent polyurethane system comprising lignin, a polyurethane polymer and an adhesive thereof.

BACKGROUND TO THE INVENTION

Polyurethanes are very versatile polymers being used as binders, foams (rigid and flexible), adhesives and sealants, elastomers, coatings and binders, among others. Given the diversity of applications, in mattresses, upholstery, dashboard liners, adhesives, sealants, etc., global production rates are increasing, to currently about 18 million tons annually. Therefore, the demand for polyurethanes and their precursors is high, and their production processes, are under more and more scrutiny. There is an industrial interest in making the production of polyurethanes more environmentally friendly.

Polyurethanes are made by polyaddition of an isocyanate, such as toluene diisocyanate (TDI) or methylene diphenyl diisocyanate (MDI), with a polyol which should have an average hydroxy functionality of at least 2.

Polyurethane (PU), as a polymer material with versatile product forms and excellent performance, is used in coatings, elastomers, adhesives, and foams widely. However, the raw materials (polyols and isocyanates) of PU are usually made using petroleum-derived chemicals. With the concern for depletion of petroleum resources and the associated negative impact on the environment, developing technologies that can use renewable raw materials as feedstock has become a research hotspot. Lignin, as an abundant, natural, and renewable organic carbon resource, has been explored as raw material for making polyurethanes because it possesses rich hydroxyl groups on its surface. Lignin or modified lignin has been shown to impart the polyurethane material with beneficial functionalities, such as UV-blocking ability, hydrophobicity, and flame retardancy. On the other end, the integration of lignin in polyurethane systems also tends to generate more rigid (and eventually brittle) end products, which could be seen as a drawback for certain applications. Hence, there is still an interest in designing lignin-based polyurethanes with tunable and improved mechanical properties. In the state of the art, this is done by chemically modifying the lignin.

Saffar et al., 2020 disclose a method for producing rigid polyurethane foam (RPUF) from pyrolytic lignin (PL), wherein the lignin was first oxypropylated. In this reaction, the phenolic groups of lignin are reacted with propylene oxide, resulting in the grafting of polypropylene oxide) chains on the lignin structure. The obtained modified lignin contains only aliphatic hydroxyl groups and becomes a liquid polyol (in contrast to the unmodified lignin which is a solid) with an optimal hydroxyl index for polyurethane foam formulations. Both approaches, using lignin directly or after chemical modification, formed materials with promising properties. A disadvantage of Saffar et al., 2019 is that this polyurethane synthetic route require the use of I specifically modified lignin, which increases the amount of reagents used and adds complexity.

There is an industrial need for PUs comprising lignin overcoming the drawback of the prior art, which are environmentally friendly and having good mechanical properties, which are easily tunable.

SUMMARY OF THE INVENTION

In a first aspect, the present invention relates to a multicomponent polyurethane system, which is adapted to provide a polyurethane, wherein the system comprises:

- an isocyanate having two or more isocyanate groups i.e. -N=C=O, in other words, a diisocyanate, triisocyanate etc..;
- a polyol, and preferably a diol;
- lignin; and
- one or more sugars; wherein the one or more sugars comprise at least one methoxy group ($-OCH_3$) and at least one hydroxy group (-OH), in other words, at least one -OH group of said sugar is methylated and at one least -OH group of said sugar is a free hydroxyl group. It has surprisingly been found that the presence of one or more partially methylated sugars has been found to provide an effective way of tuning the mechanical properties of the obtainable polyurethanes. It has also been found that high concentration of partially methylated sugars can be incorporated in the polyurethanes of this invention. This is an advantage as sugar containing polyurethanes proved to be more environmentally friendly polymers. Further, by means of the present invention it is rendered possible to valorize sugars which up to now are considered as waste.

In an embodiment of the present invention, in the multicomponent polyurethane system the one or more sugars are present at a concentration $C_{sugar}$, as defined by eq. 1, from 1.0% w/w to 10.0% w/w. An advantage of the present embodiment is that the aforementioned range enhances significantly the mechanical properties and deformation resistance of the derived PU materials. Incorporation of higher amount of sugar led to the formation of rigid and brittle PU materials.

In a further embodiment of the present invention, the lignin in the system is present at a concentration $C_{lignin}$, as defined by eq. 2, from 1.0% w/w to 15.0% w/w. An advantage of the present embodiment is that the aforementioned range of lignin contributes to the enhancement of the mechanical properties and deformation resistance of derived PU materials.

In a further embodiment of the present invention, the lignin in the system is present at a concentration $C_{lignin}$, as defined by eq. 2, from 15.0% w/w to 30.0% w/w. Incorporation of lignin according to the present embodiment provides for enhanced adhesion performance, especially on wood.

In yet a further embodiment of the present invention, the lignin and the one or more sugars in the multicomponent polyurethane system are provided as a methanolysis product of a lignocellulosic biomass. An advantage of the present embodiment is that polyurethanes can be easily obtained in an environmentally friendly way, without the need of intensive processing of the lignocellulosic biomass after methanolysis.

In yet another embodiment of the present invention, the polyol is selected from the list comprising: polytetrahydrofuran (PTHF), polypropylene glycol (PPG), polyethylene glycol (PEG). An advantage of the present embodiment is that the said polyols are compatible with lignin and sugars and able to adjust flexibility of the lignin-based polyurethanes.

In another embodiment of the present invention, the multicomponent polyurethane system further comprises a solvent, which is provided to solubilize, at least partially, at least one component. An advantage of the present embodiment is that it is able to solubilize all the reagents prior polymerization, especially methylated sugars, resulting in fully homogeneous PU materials.

In another embodiment of the present invention, wherein the one or more sugars, the one or more isocyanates, the lignin and the one or more polyols are present in the system at a concentration $C_{sol}$, in volume respect to the solvent, and defined according to eq. 6, which is from 150 w/v % to 250 w/v %, preferably 175 w/v % to 225 w/v %. An advantage of the present embodiment is that it provides for a solution without requiring an excessive use of solvent, whilst providing for a system which can be advantageously used as adhesive.

In an embodiment of the present invention, the solvent preferably comprises an ether, preferably a cyclic ether, preferably tetrahydrofuran (THF). According to a preferred embodiment of the present invention, the solvent comprises Tetrahydrofuran (THF). An advantage of the present embodiment is that is able to fully solubilize all the reagents in room temperature and also it is a low boiling point solvent which facilitates its evaporation.

In a second aspect, the present invention pertains to a multicomponent adhesive comprising the multicomponent polyurethane system according to any one embodiment of the present invention. It was surprisingly found that the adhesive according to the present invention has really good adhesion properties. The adhesive of the present invention is environmentally friendly due to its use of possible waste side-product of biomass.

In an embodiment of the present invention the polymer is any one of a polymer film, a polymer sheet, a polymer foam, a polymer resin, preferably a polymer film, a polymer sheet or a polymer resin.

According to another aspect, the present invention pertains to an article (e.g., coated article) comprising:

(a) a substrate; and
(b) a polyurethane polymer according to any other embodiment of the present invention, applied on a surface of the substrate.

According to a further embodiment of the present invention, the substrate is of a material selected from: metal, plastics, glass, wood, fabric (or textile), composites, and ceramics.

According to a further embodiment of the present invention the article is further comprising an additional substrate, wherein: the polyurethane is also applied on a surface of the additional substrate, and the polyurethane polymer joins the substrate and the additional substrate together.

BRIEF DESCRIPTION OF THE DRAWINGS

With specific reference now to the figures, it is stressed that the particulars shown are by way of example and for purposes of illustrative discussion of the different embodiments of the present invention only. They are presented in the cause of providing what is believed to be the most useful and readily description of the principles and conceptual aspects of the invention. In this regard no attempt is made to show structural details of the invention in more detail than is necessary for a fundamental understanding of the invention. The description taken with the drawings making apparent to those skilled in the art how the several forms of the invention may be embodied in practice.

**Figure 1A and Figure 1B,** also abbreviated as **Fig. 1A and Fig. 1B,** illustrate measurements of the tensile properties of the polyurethanes of the present invention, in particular the stress versus tensile strength of polyurethanes comprising sugars at various concentrations according to the present invention.

**Figure 2A and Figure 2B,** also abbreviated as **Fig. 2A and Fig. 2B,** illustrate DMA measurements of storage modulus E' (**Fig. 2A**) versus temperature and glass transition temperature (**Fig. 2B**) of polyurethanes comprising sugars at various concentration according to the present invention.

**Figure 3,** also abbreviated as **Fig. 3**, illustrates soluble fraction of polyurethanes of the present invention at various concentrations of sugar.

**Figure 4,** also abbreviated as **Fig. 4**, illustrates beneficial adhesive properties of polyurethanes according to the present invention.

DETAILED DESCRIPTION OF THE INVENTION

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous. When describing the compounds of the invention, the terms used are to be construed in accordance with the following definitions, unless a context dictates otherwise. The term "about" or "approximately" as used herein when referring to a measurable value such as a parameter, an amount, a temporal duration, and the like, is meant to encompass variations of +/- 10 % or less, preferably +/- 5 % or less, more preferably +/-1 % or less, and still more preferably +/- 0.1 % or less of and from the specified value, insofar such variations are appropriate to perform in the disclosed invention. It is to be understood that the value to which the modifier "about" or "approximately" refers is itself also specifically, and preferably, disclosed. In the context of the present invention, "a/an" feature, e.g. "a polyol", is to be interpreted as one or more polyols.

In a first aspect, the present invention relates to a multicomponent polyurethane system comprising:

- a isocyanate having two or more isocyanate groups;
- a polyol, preferably a diol;
- lignin; and
- one or more sugars; wherein the one or more sugars comprise at least one methoxy group and at least one hydroxy group.

Hence, according to a first aspect, the present invention pertains to a polyurethane system comprising at least 4 components, specifically an isocyanate having two or more isocyanate groups, a polyol, lignin, and one or more sugars, wherein the one or more sugars comprise at least one methoxy group and at least one hydroxy group. An advantage of the present aspect of this invention is that the polyurethane system allows for the inclusion of high concentration of sugars, thereby providing for more environmentally friendly polymers, which can make use of biomass derived compounds, specifically lignin and sugars. Further, the polyurethane system of the present invention is highly tunable in that the sugar content can be varied thereby affecting the rigidity of the obtainable polyurethane.

In the context of the present invention, by means of the term "isocyanate", reference is made to a compound comprising at least one isocyanate functional group of formula R-N=C=O, wherein R is a chemical group which can further comprise other -N=C=O groups. In accordance with the present invention, the isocyanate in the polyurethane system comprises at least two isocyanate groups i.e. it is a diisocyanate, triisocyanate, etc..

The polyurethane system according to the present invention comprises at least one isocyanate component which is capable of reacting with a polyol to form a polyurethane. In particular, the isocyanate in the system of the present invention is one having two or more isocyanate groups.

The isocyanate in accordance with the present invention can be selected from the group consisting of aromatic polyisocyanates, aliphatic polyisocyanates, cycloaliphatic polyisocyanates, and combinations of two or more thereof. As used herein, a "polyisocyanate" is any compound that contains two or more isocyanate groups.

An "aromatic polyisocyanate" is a polyisocyanate that contains one or more aromatic rings. An "aliphatic polyisocyanate" contains no aromatic rings. A "cycloaliphatic polyisocyanate" is a subset of aliphatic polyisocyanates, wherein the chemical chain is ring-structured.

Suitable aromatic polyisocyanates include, but are not limited to, 1,3- and 1,4-phenylene diisocyanate, 1,5-naphthylene diisocyanate, 2,6-tolulene diisocyanate, 2,4-tolulene diisocyanate (2,4-TDI), 2,4'-diphenylmethane diisocyanate (2,4'-MDI), 4,4'-diphenylmethane diisocyanate, 3,3'-dimethyl-4,4'-biphenyldiisocyanate ("TODI") and isomers thereof, polymeric isocyanates, and mixtures of two or more thereof.

Suitable aliphatic polyisocyanates have 3 to 16 carbon atoms, or 4 to 12 carbon atoms, in the linear or branched alkylene residue. Suitable cycloaliphatic polyisocyanates have 4 to 18 carbon atoms, or 6 to 15 carbon atoms, in the cycloalkylene residue. Cycloaliphatic diisocyanates refer to both cyclically and aliphatically bound NCO groups, such as isophorone diisocyanate and diisocyanatodicyclohexylmethane (H12MDI).

Suitable aliphatic and cycloaliphatic polyisocyanates include, but are not limited to, cyclohexane diisocyanate, methylcyclohexane diisocyanate, ethylcyclohexane diisocyanate, propylcyclohexane diisocyanate, methyldiethylcyclohexane diisocyanate, propane diisocyanate, butane diisocyanate, pentane diisocyanate, hexane diisocyanate, heptane diisocyanate, octane diisocyanate, nonane diisocyanate, nonane triisocyanate, such as 4-isocyanatomethyl-1,8-octane diisocyanate (TIN), decane di- and triisocyanate, undecane di- and triisocyanate and dodecane di- and triisocyanate, isophorone diisocyanate (IPDI), hexamethylene diisocyanate (HDI), diisocyanatodicyclohexylmethane (H12MDI), 2-methylpentane diisocyanate (MPDI), 2,2,4-trimethylhexamethylene diisocyanate/2,4,4-trimethylhexamethylene diisocyanate (TMDI), norbornane diisocyanate (NBDI), xylylene diisocyanate (XDI), tetramethylxylylene diisocyanate, and dimers, trimers, and mixtures of the of two or more thereof. Typical isocyanates that are used in the state of the art for the synthesis of polyurethanes are e.g. methylene diphenyl diisocyanate (MDI) and toluene diisocyanate (TDI), although higher functional isocyanates may be added to increase crosslinking and therefore stiffness in the final application.

In the context of the present invention, by means of the term "polyurethane system", reference is made to a system for forming a polyurethane.

In the context of the present invention, by means of the term "polyurethane", also referenced with the acronyms "PU" or "PUR", reference is made to a polymer composed of organic units joined by carbamate bonds (-NH-(C=O)-O-), which link molecular units together. Polyurethanes are traditionally and most commonly formed by reacting an isocyanate (di- or triisocyanate) with a polyol. Depending on the type of isocyanates and polyols utilized for the manufacturing of the polyurethanes, a multitude of material properties can be obtained. Polyurethanes are a diverse class of heteropolymers, made by reacting isocyanate with polyol monomers.

In the polyurethane system according to the present invention, catalysts may also be included. The catalysts may be any known compounds known to catalyze isocyanate reactions. Examples for this are titanates such as tetrabutyl titanate and Tetra propyl titanate, tin carboxylates such as Dibutylzinndilaulat (DBTL), dibutyltin diacetate, tin octoate, and preferably Tin(II) 2-ethylhexanoate; tin oxides such as dibutyltin oxide, and dioctyltin oxide; aluminum compounds such as aluminum tris(acetylacetonate, aluminum tris organo-ethyl acetoacetate; chelate compounds such as titanium tetra acetylacetonate; amine compounds such as triethylene diamine, guanidine, diphenylguanidine, 2,4,6-tris(dimethylaminomethyl)phenol, morpholine, N-methylmorpholine, 2-ethyl-4-methyl imidazole, and 1,8-diazabicyclo[2.2.2]undec-7-ene (DBU) 5.4.0), 1,4-diazabicyclo[2.2.2]octane, N,N-dimethylpiperazine, 1,8-diazabicyclo[5.4.0]undec-7-ene, Dimorpholinodimethylether DMDEE dimorpholinodiethyl ether, or mixtures thereof. The catalysts are preferably used in an amount from 0.01 to about 5 percent by weight based on the total weight of the composition. Dioctyltin oxide was found particularly useful in catalyzing the formation of the polyurethane.

Further, the multicomponent polyurethane system according to the present invention comprises a polyol. In the context of the present invention, by means of the term "polyol", reference is made to a compound comprising at least two alcohol moieties e.g. $R-(OH)_n$, with n>=2, such as a diol, a triol etc.. Examples of polyols suitable to carry out the present invention include, and are not limited to, polyether polyols, polyester polyols, polycaprolactone polyols, polycarbonate polyols, natural oil based polyols, recycled polyols, and mixtures of two or more thereof.

Suitable polyether polyols for use according to this disclosure include, but are not limited to, polypropylene glycols, polytetramethylene ether glycols, polybutylene oxide based polyols, or mixtures and copolymers of them.

Various polyols having different molar mass can be used. According to an embodiment of the present invention it was found advantageous for said one or more polyols in the polyurethane system to have an average molar mass of from 200 to 3000 g mol$^{-1}$.

Suitable polypropylene glycols for use according to this disclosure include, but are not limited to, polyols based on propylene oxide, ethylene oxide, or mixture of them with initiators selected from propylene glycol, dipropylene glycol, sorbitol, sucrose, glycerin, and/or mixtures of them, available from the Dow Chemical Company under the trade name of VORANOL™, the BASF Company under the trade name of PLURACOL™, Lonza under trade name POLY-G™, POLY-L™, and POLY-Q™, and from Covestro AG under the trade name ACCLAIM™.

Suitable polytetramethylene ether glycols for use according to this disclosure include, but are not limited to, POLYTHF™ from the BASF Company, TERATHAN™ from Invista, PTMG™ from Mitsubishi, and PTG™ from Dairen.

Suitable polybutylene oxide-based polyols for use according to this disclosure include, but are not limited to, a polybutylene oxide homopolymer polyol, a polybutylene oxide-polypropylene oxide copolymer polyol, and a polybutylene oxide-polyethylene oxide copolymer polyol.

Suitable polyester polyols for use according to this disclosure include, but are not limited to, aliphatic polyester polyols, aromatic polyester polyols, copolymers of aliphatic and aromatic polyester polyol, polycarbonate polyols, and polycaprolactone polyols.

Polyester polyols for use according to this disclosure are reaction products of a polybasic acid and a polyhydric alcohol. Suitable polybasic acids for use according to this disclosure include, but are not limited to, succinic acid, adipic acid, azelaic acid, sebacic acid, dodecanedicarboxylic acid, maleic anhydride, fumaric acid, 1,3-cyclopentanedicarboxylic acid, 1,4-cyclohexanedicarboxylic acid, terephthalic acid, isophthalic acid, phthalic acid, 1,4-naphthalenedicarboxylic acid, 2, 5-naphthalenedicarboxylic acid, 2,6-naphthalenedicarboxylic acid, naphthalic acid, biphenyldicarboxylic acid, 1,2-bis(phenoxy)ethane-p,p'-dicarboxylic acid, and anhydrides or ester-forming derivatives of these dicarboxylic acids; and p-hydroxybenzoic acid, p-(2-hydroxyethoxy)benzoic acid, and ester-forming derivatives or dimer acids of these dihydroxycarboxylic acids; and mixtures of two or more thereof.

Any known polyhydric alcohol can be used. Specific examples of a polyhydric alcohol include, but are not limited to, glycols such as ethylene glycol, propylene glycol, 1,3-propanediol, 1,4-butanediol, 1,5-pentanediol, 3-methyl-1,5-pentanediol, 1,6-hexanediol, neopentylglycol, methylpentanediol, dimethylbutanediol, butylethylpropanediol, diethylene glycol, triethylene glycol, tetraethylene glycol, dipropylene glycol, tripropylene glycol, bishydroxyethoxybenzene, 1,4-cyclohexanediol, 1,4-cyclohexanedimethanol, triethylene glycol, polycaprolactone diol, dimer diol, bisphenol A, and hydrogenated bisphenol A; polyesters produced through ring opening polymerization of cyclic ester compounds, such as propiolactone, butyrolactone, e-caprolactone, 8-valerolactone, and beta-methyl-delta-valerolactone; and polyethers produced from addition polymerization of one or more monomers including ethylene oxide, propylene oxide, butylene oxide, styrene oxide, epichlorohydrin, tetrahydrofuran, and cyclohexylene in the usual manner with the aid of one or more compounds containing two active hydrogen atoms as an initiator, e.g., ethylene glycol, diethylene glycol, triethylene glycol, propylene glycol, trimethylene glycol, 1,3-butanediol, 1,4-butanediol, 1,6-hexanediol, and neopentylglycol; and mixtures of two or more thereof.

In a preferred embodiment of the present invention, the polyol is selected from the list comprising: polytetrahydrofuran (PTHF), polypropylene glycol (PPG), polyethylene glycol (PEG). It was found that these polyols show high compatibility with lignin whilst allowing for low cost and performance.

In the context of the present invention, by means of the term "methanolysis product", reference is made to the product of a methanolysis reaction, meaning a reaction wherein methanol is reacted at high temperature and/or high pressure with an ester functionality, thereby providing the formation of at least one methoxy group.

In the context of the present invention, by means of the term "sugar", reference is made to a monosaccharide or a lower oligosaccharide, meaning a saccharide polymer containing from 2 to 10 monosaccharides bound together by glycosidic linkages.

Monosaccharides are the simplest forms of sugar and the most basic units (monomers) from which all carbohydrates are built. Simple monosaccharides have a linear and unbranched carbon skeleton with one carbonyl (C=O) functional group, and one hydroxyl (OH) group on each of the remaining carbon atoms. Therefore, the molecular structure of a simple monosaccharide can be written as $H(CHOH)_n(C=O)(CHOH)_mH$, where $n + 1 + m = x$ with $x$ the number of carbon atoms along the backbone; so that its elemental formula is $C_xH_{2x}O_x$. By convention, the carbon atoms are numbered from 1 to $x$ along the backbone, starting from the end that is closest to the C=O group.

Examples of monosaccharides include glucose (dextrose), fructose (levulose), and galactose. Monosaccharides are the building blocks of disaccharides (such as sucrose and lactose) and polysaccharides (such as cellulose and starch). A monosaccharide often switches from the acyclic (open-chain) form to a cyclic form, through a nucleophilic addition reaction between the carbonyl group and one of the hydroxyls of the same molecule. The reaction creates a ring of carbon atoms closed by one bridging oxygen atom. The resulting molecule has a hemiacetal or hemiketal group, depending on whether the linear form was an aldose or a ketose. The reaction is easily reversed, yielding the original open-chain form.

In these cyclic forms, the ring usually has five or six atoms. These forms are called furanoses and pyranoses, respectively-by analogy with furan and pyran, the simplest compounds with the same carbon-oxygen ring (although they lack the double bonds of these two molecules). For example, the aldohexose glucose may form a hemiacetal linkage between the aldehyde group on carbon 1 and the hydroxyl on carbon 4, yielding a molecule with a 5-membered ring, called glucofuranose. The same reaction can take place between carbons 1 and 5 to form a molecule with a 6-membered ring, called glucopyranose. Cyclic forms with a seven-atom ring (the same of oxepane), rarely encountered, are called heptoses. For many monosaccharides (including glucose), the cyclic forms predominate, in the solid state and in solutions, and therefore the same name commonly is used for the open- and closed-chain isomers. Thus, for example, the term "glucose" may signify glucofuranose, glucopyranose, the open-chain form, or a mixture of the three.

In an embodiment of the present invention, the one or more sugars is a lignocellulosic biomass-derived sugar. By means of the term "lignocellulosic biomass-derived sugars", reference is made to a sugar derivable from a biomass (e.g. wood, agricultural residues, municipal solid waste). The winning/recovering of sugars form biomass can be accomplished by means of various methods, such as, acid hydrolysis, enzymatic hydrolysis, organosolv dissolution, autohydrolysis or supercritical hydrolysis.

Various types of sugars, and sugars with widely varying molar masses can be used. According to an embodiment of the present invention it was found advantageous for said one or more sugars in the polyurethane system to have an average molar mass of from 250 to 3000 g mol$^{-1}$. The latter range of molar masses results in better miscibility with co reagents as well better solubility with THF

6

In an embodiment of the present invention, in the multicomponent polyurethane system the one or more sugars are present in the system at a concentration $C_{sugar}$, defined according to eq. 1

$$C_{sugar}(\%, w/w) = \frac{w_{sugar}}{w_{sugar}+w_{lignin}+w_{polyol}+w_{isocyanate}} \times 100 \text{ (eq.1)}$$

wherein $w_{sugar}$ corresponds to the sum of the weights the one or more sugars, $w_{lignin}$ corresponds to the weight of the lignin, $w_{isocyanate}$ corresponds to the sum of the weights the one or more isocyanates and $w_{polyol}$ corresponds to the sum of the weights the one or more polyols, wherein $C_{sugar}$ is from 1.0% w/w to 10.0% w/w. It should be noted that incorporation of sugars above 10.0 % w/w resulted in the deterioration of mechanical properties of the derived films as they were too rigid and brittle to be tested. In particular, the obtained polymer films wherein $C_{sugar}$ is from 1.0% w/w to 10.0% w/w possess optimum performance in terms of thermo-mechanical properties. It was surprisingly found that $C_{sugar}$ above 10.0 w/w% led to the deterioration of films' properties.

An advantage of the present embodiment is that the aforementioned range enhances significantly the mechanical properties and deformation resistance of the derived PU materials. Incorporation of higher amounts of sugar led to the formation of rigid and brittle PU materials.

In an embodiment of the present invention, the one or more sugars are selected from the list: methyl-pentopyranoside, methyl-D-gluconpyranoside, methyl-D-xylopyranoside, methyl 3-O-acetylpentopyranoside, dimethyl-4-O-methyl-hexanopyroside.

In the context of the present invention, by means of the term "methoxy group", reference is made to a group of formula -O-CH₃.

The multicomponent adhesive according to the present invention may optionally comprise the commonly used additives known to the person skilled in the art. Examples of such additives are urea, methanol, hardeners, fillers and/or extenders. Examples of fillers or extenders are wheat flour, limestone, corn starch or flour of coconut, walnut shell, soya bean and wood. Examples of hardener are sodium carbonate and sodium hydroxide.

The multicomponent polyurethane system of the present invention further comprises lignin. In the context of the present invention, by means of the term "lignin", reference is made to a heterogeneous biopolymer, which is a structural material in many plants, and any lignin containing plant may be used to provide the lignin for use in the present invention. Hereby lignins suitable for use in the polyurethane system of the invention include a lignin-containing biomass, such as a lignocellulosic biomass having several -OH groups for the polymerization reaction with isocyanates.

Examples of suitable plants containing lignin include grasses, e.g. wheat, rice, barley, oats, rye, sugarcane, etc.: legumes, e.g. soy, peas, beans, lentils, alfalfa, clover, lupins, mesquite, carob, peanuts, and tamarind: other crops, e.g. corn, waste from the processing of fruits, plants used for fibres for fabrics or textiles, e.g. cotton, hemp, linen, and trees, such as trees commonly used for pulp and paper production and lumber or timber, including waste from forestry, e.g. softwood or hardwood. Examples of preferred lignins include grasses, e.g. wheat straw.

The lignin obtained from such lignocellulosic biomass is also suitable for use in the polyurethane system of the invention, and include in particular kraft lignin and organsolv lignin, with organsolv lignin being preferred.

In an embodiment of the present invention, the lignin is present in the system at a concentration $C_{lignin}$, defined according to eq. 2

$$C_{lignin}(\%, w/w) = \frac{w_{lignin}}{w_{sugar}+w_{lignin}+w_{polyol}+w_{isocyanate}} \times 100 \text{ (eq.2)}$$

wherein $w_{sugar}$ corresponds to the sum of the weights the one or more sugars, $w_{lignin}$ corresponds to the weight of the lignin, $w_{isocyanate}$ corresponds to the sum of the weights the one or more isocyanates and $w_{polyol}$ corresponds to the sum of the weights the one or more polyols, wherein $C_{lignin}$ is from 1.0% w/w to 15.0% w/w.

An advantage of the present embodiment is that it provides for polyurethanes having optimal rigidity and higher crosslinking density. Further, an advantage of the present embodiment is that the aforementioned range of lignin contributes to the enhancement of the mechanical properties of and deformation resistance of the derived polyurethane materials. It was surprisingly found that polyurethane systems having $C_{lignin}$ from 15.0% w/w provide for brittle polyurethane materials e.g. polyurethane films, having less desirable characteristics, nevertheless, they provide for adhesives having good adhesion properties.

In particular, according to a further embodiment of the present invention, the lignin is present in the system at a concentration $C_{lignin}$, defined according to eq. 2, from 15.0% w/w to 30.0% w/w. Incorporation of lignin according to the present embodiment provides for enhanced adhesion performance, especially on wood.

In an embodiment of the present invention, the lignin and the one or more sugars are provided as a methanolysis product of a lignocellulosic biomass. In other words, the lignin and the one or more sugars in the system are provided as part of a lignin fraction which is produced by lignocellulosic biomass by organosolv pulping process. Typical organosolv processes are performed in a mixture of water and an organic solvent, usually alcohols at temperatures below 200 °C. In the treatment, lignin is fragmented and dissolved in organic solvent (methanol, ethanol, isopropanol, and butanol), and hemicellulose is depolymerized into soluble saccharides, leaving cellulose as an insoluble ingredient. The recovery of solid lignin from organosolv pulping can be achieved by the addition of acidified water followed by filtration or centrifugation leaving digested hemicellulose and small lignin fragments in the liquid. The recovered solid lignin is mainly used as polyol for the synthesis of polyurethanes while the liquid fraction rich in sugar degradation products such as sugars and liquid oligomers is considered as waste and it is discarded by industry.

In the context of the present invention, by means of the term "lignocellulosic biomass", reference is made to biomass which is suitable to be used in a variety of industrial processes. In the context of the present invention, lignocellulosic biomass can comprise softwood, hardwood, crops, trees, bushes, grasses, agricultural residues and waste wood.

In another embodiment of the present invention, the multicomponent polyurethane system further comprises a solvent, preferably a solvent comprising an ether, preferably a cyclic ether. The incorporation of a solvent in the polyurethane system according to the present embodiment allows for the obtainment of one or more viscous mixtures which are suitable as adhesive, which were surprisingly found to have really good adhesion properties.

In another embodiment of the present invention, where the system comprises a solvent, the one or more sugars, the one or more isocyanates, the lignin and the one or more polyols are present in the system at a concentration $C_{sol}$, in volume respect to the solvent, defined according to eq. 6

$$C_{sol}(\%, w/v) = \frac{w_{sugars} + w_{lignin} + w_{polyol} + w_{isocyanate}}{V_{solvent}} \times 100 \text{ (eq.6)}$$

wherein $w_{sugar}$ corresponds to the sum of the weights the one or more sugars, $w_{lignin}$ corresponds to the weight of the lignin, $w_{isocyanate}$ corresponds to the sum of the weights the one or more isocyanates, $w_{polyol}$ corresponds to the sum of the weights the one or more polyols and $V_{solvent}$ corresponds to the volume of the solvent, wherein $C_{sol}$ is from 150 w/v % to 250 w/v %, preferably from 175 w/v % to 225 w/v %. An advantage of the present embodiment is that it provides for a solution without requiring an excessive use of solvent, whilst providing for an a system which can be advantageously used as adhesive.

In an embodiment of the present invention, the solvent is Tetrahydrofuran (THF), also known as oxolane. It was found that the present solvent is particularly suitable to form adhesive comprising the system according to the present invention.

In a second aspect, the present invention pertains to a multicomponent adhesive comprising the multicomponent polyurethane system according to any one embodiment of the present invention. The adhesive according to the present invention provides for really good adhesion, especially on wood. The adhesive is further advantageously comprising components which are readily available from the processing of biomass, thereby rendering the adhesive cheaper and easier to produce.

In the context of the present invention, by means of the term "multicomponent adhesive", reference is made to an adhesive comprising more than one component which "hardens" or cures into a material capable of holding two or more substrates together, bearing the forces involved. The hardening of the adhesive is due to a chemical reaction, in particular one that provides for the crosslinking of at least two components.

The adhesive in accordance with the present invention can be used in the manufacturing of laminates, mineral wool insulation and wood products such as plywood, laminated veneer lumber (LVL), oriented strand boards (OSB), medium density fiberboards (MDF) and particle boards, furniture manufacturing.

In a further aspect, the present invention pertains to a polyurethane polymer comprising a crosslinked product of the multicomponent polyurethane system according to any one embodiment of the present invention. In the context of the present invention, by means of the term "crosslinked product", reference is made to a product comprising one or more a bond or a short sequence of bonds that links one polymer chain to another Due to high hydroxyl content of the sugars they play the role of a multi-functional cross-linker during PU synthesis therefore the cross linking density of the derived PU material is enhanced. The present aspect hence pertains to the polyurethane polymer per-se, which is obtainable from the polyurethane system previously described by providing each component in the polyurethane system to interreact. The obtainment of the polyurethane polymer can be achieved by contacting the isocyanate component with the other components of the polyurethane system.

In an embodiment of the present invention the polymer is any one of a polymer film, a polymer sheet, a polymer foam, a polymer resin, preferably a polymer film, a polymer sheet or a polymer resin.

According to another aspect, the present invention pertains to an article (e.g., coated wood) comprising:

(a) a substrate; and

(b) a polyurethane polymer according to any other embodiment of the present invention, coated on a surface of the substrate.

In the context of the present invention, by means of the term "article", reference is made to an item or object. Example of articles in accordance with the present invention are laminates, mineral wool insulation and wood products such as plywood, laminated veneer lumber (LVL), medium density fiberboards (MDF) and particle boards manufactured using the adhesive of the present invention.

According to a further embodiment of the present invention, the substrate is of a material selected from: metal, plastics, glass, wood, fabric (or textile), composites, and ceramics.

According to a further embodiment of the present invention the article is further comprising an additional substrate, wherein: the polyurethane polymer is also coated on a surface of the additional substrate, and the polyurethane polymer joins the substrate and the additional substrate together.

According to yet a further aspect, the present invention pertains to the use of a methanolysis product of a lignocellulosic biomass in the manufacturing of any one of: a polymer film, a polymer sheet, a polymer foam, a polymer resin, an adhesive, preferably a multicomponent adhesive. It was found that the use of the product obtained after subjecting a lignocellulosic biomass to a methanolysis reaction, is particularly advantageous in that it provides for a lignin fraction (which comprises lignin and one or more methylated sugars), which has really good mechanical properties and really good adhesive properties, as elucidated in the examples. Methanolysis product of a lignocellulosic biomass are usually subjected to a separation step where lignin and contained sugars are separated. The use according to the present aspect of the invention provides a way to make use of such methanolysis product comprising lignin and one or more methylated sugars whilst providing adhesives and polymers having beneficial mechanical properties.

## EXAMPLES

### Materials

Lignin and sugars were supplied by Vertoro and used as received without any further purification. Hexamethylene diisocyanate trimer Desmodur® ultra N 3600 (further mentioned as "HDI trimer") was purchased from Covestro. Polytetrahydrofuran (PTHF, $M_n$ = 650 g/mol), Stannous octoate (Sn(Oct)z, 92.5-100.0%), anhydrous tetrahydrofuran (anhydrous THF, ≥99.9%) were purchased from Alfa Aesar or Sigma Aldrich and were used as received.

### Methods

### - Preparation of lignin/sugars-based polyurethanes (LSPUFs) films

Lignin-sugars-based polyurethanes (LSPUFs) were synthesized using a four-component system formed by polycondensation reactions between a polyol mixture of lignin, sugars and PTHF with HDI trimer. By varying the weight concentration of the one or more sugars (see $C_{sugar}$, defined by eq. 1), lignin (see $C_{lignin}$, defined by eq. 2), one or more polyols (see $C_{polyol}$, defined by eq. 3), and/or one or more isocyanates (see $C_{isocyanate}$, defined by eq. 4), a series of LSPUFs films were prepared. Totally four different weight ratios of sugars were used for the syntheses of polymeric films under similar conditions namely, 0, 1.4, 3.9, 7.8 w/w %.

$$C_{sugar}(\%, w/w) = \frac{w_{sugar}}{w_{sugar}+w_{lignin}+w_{polyol}+w_{isocyanate}} \times 100 \quad \text{(eq.1)}$$

$$C_{lignin}(\%, w/w) = \frac{w_{lignin}}{w_{sugar}+w_{lignin}+w_{polyol}+w_{isocyanate}} \times 100 \quad \text{(eq.2)}$$

$$C_{polyol}(\%, w/w) = \frac{w_{polyol}}{w_{sugar}+w_{lignin}+w_{polyol}+w_{isocyanate}} \times 100 \quad \text{(eq.3)}$$

$$C_{isocyanate}(\%, w/w) = \frac{w_{isocyanate}}{w_{sugar}+w_{lignin}+w_{polyol}+w_{isocyanate}} \times 100 \quad \text{(eq.4)}$$

The [NCO]/[OH] ratio was equal to 1.05 and was calculated according to the isocyanate groups from HDI trimer and total hydroxyl content (both phenolic and aliphatic group from lignin, sugars and PTHF). The [NCO]/[OH] ratio was calculated using eq. 5:

$$\frac{[NCO]}{[OH]} = \frac{w_{HDI\ trimer} \times [NCO]_{HDI\ trimer}}{w_{PTHF} \times [OH]_{PTHF} + w_{lignin} \times [OH]_{lignin} + w_{sugar} \times [OH]_{sugar}} = 1.05 \text{ (eq.5)}$$

Where $w_{HDI\ trimer}$, $w_{PTHF}$, $w_{lignin}$, $w_{sugar}$ represent the weights (g) of HDI trimer, PTHF, lignin, and the one or more sugars, respectively; $[NCO]_{HDI\ trimer}$ is the molar content of isocyanate groups in HDI trimer, in mmol g$^{-1}$; $[OH]_{PTHF}$, $[OH]_{lignin}$ and $[OH]_{sugar}$ are the molar content of total hydroxyl groups in the polyol, lignin and sugars in mmol g$^{-1}$, respectively.

In the context of eq. 1, 2, 3 , 4, 5 and 6, $w_{sugar}$ corresponds to the sum of the weights the one or more sugars used in the polyurethane system of the present invention, $w_{lignin}$ corresponds to the weight of the lignin used in the polyurethane system of the present invention, $w_{isocyanate}$ corresponds to the sum of the weights the one or more isocyanates used in the polyurethane system of the present invention, $w_{polyol}$ corresponds to the sum of the weights the one or more polyols used in the polyurethane system of the present invention. For example, if 1 sugar is used, $w_{sugar}$ corresponds to the weight of said sugar, if 2 sugars are used, $w_{sugar}$ corresponds to the sum of the weights of the 2 sugars, this is mutatis mutandis for $w_{lignin}$, $w_{polyol}$, $w_{isocyanate}$)

In a typical experiment a vial was charged with PTHF (0.64 g), lignin (0.15 g) and sugars (0.064 g). The mixture was dissolved in anhydrous THF (4 mL) and stirred upon complete dissolution at 40 °C under magnetic stirring. The network formation was triggered by the addition of HDI trimer (0.79 g) and Sn(Oct)z, (13 mg, 0.032 mmol, 0.8 % mol in respect to total OH content). The total mixture was left under stirring for one hour before the resulting products were poured into polytetrafluoroethylene molds and the residual solvent was eliminated by heating at 80 °C. The final curing was carried out in an oven at 105 °C for 8 h. Finally, the film was peeled and was vacuum-dried at 40 °C for 18 h to evaporate any residual THF and was stored in a desiccator before testing. The thickness of the films was about 0.5 mm. **Table 1,** here below, illustrates the compositions of 4 films (LSPUF1, LSPUF2, LSPUF3 and LSPUF4) obtained and tested according to the exemplified procedure.

**Table 1.** Compositions of LSPUFs films

| # | Sample | $C_{lignin}$ (%, w/w) | $C_{sugar}$ (%, w/w) | $C_{polyol}$ (PTHF) (%, w/w) | $C_{isocyanate}$ (HDI trimer) (%, w/w) |
|---|--------|------------------------|------------------------|-------------------------------|-----------------------------------------|
| 1 | LSPUF1 | 14.7 | 0 | 44.2 | 40.4 |
| 2 | LSPUF2 | 12.6 | 1.4 | 42.1 | 43.0 |
| 3 | LSPUF3 | 9.0 | 3.9 | 38.7 | 47.6 |
| 4 | LSPUF4 | 3.3 | 7.8 | 33.2 | 54.8 |

Wherein in Table 1, $C_{lignin}$, $C_{sugar}$, $C_{polyol}$ and $C_{isocyanate}$ are calculated according to eq. 1. to eq. 4.

**- Characterization of lignin-sugars-based polyurethanes (LSPUFs) films**

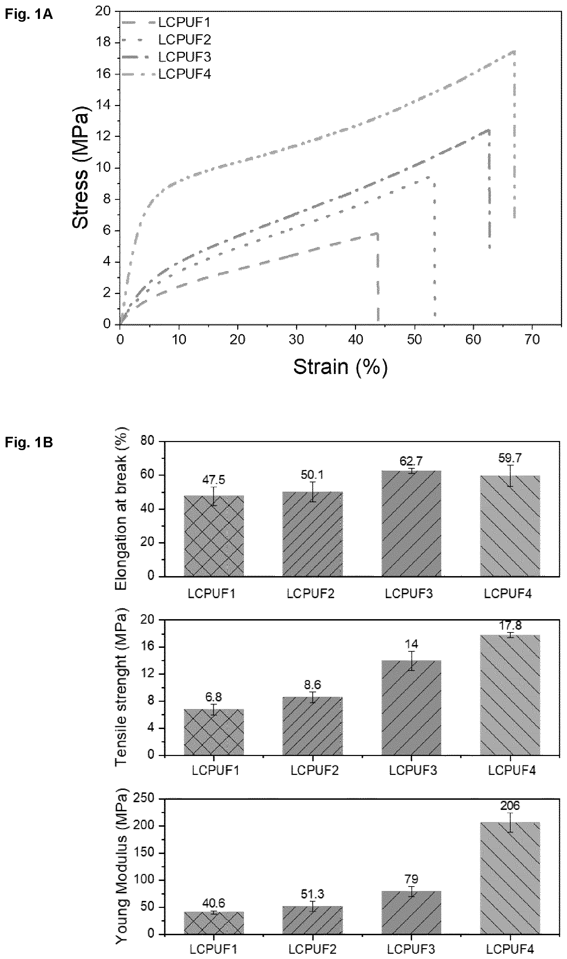

The mechanical properties of the polyurethane films LSPUF1 to LSPUF4 above where determined. **Fig. 1A and Fig. 1B** illustrate measurements of the tensile properties of the polyurethanes of the present invention, in particular the stress versus tensile strength of polyurethanes comprising sugars at various concentrations according to the present invention. In particular, **Fig. 1A** illustrates typical stress-strain curves and **Fig. 1B** the corresponding average Young's modulus, tensile strength and elongation at break values.

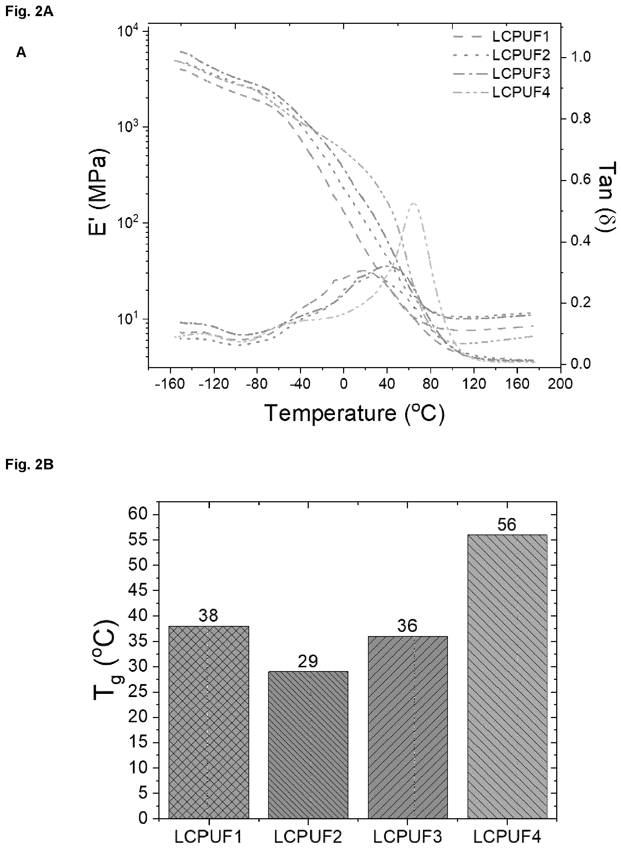

**Fig. 2A and Fig. 2B** illustrate DMA measurements of storage modulus E' and tanδ (**Fig. 2A**) versus temperature and glass transition temperature as calculated from the peak of tanδ (**Fig. 2B**) of polyurethanes comprising sugars at various concentration according to the present invention.

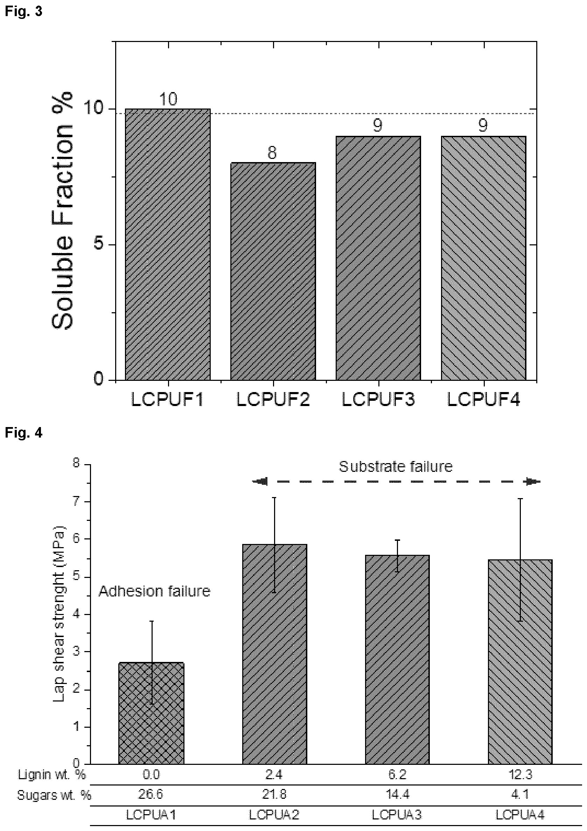

**Fig. 3** illustrates soluble fraction of polyurethanes of the present invention at various concentrations of sugar.

**- Preparation of lignin-sugars-based polyurethanes adhesives (LSPUA)**

LSPUAs adhesives were prepared using the same experimental procedure for the preparation of LSPU films.

In the preparation of these adhesives, the one or more sugars, the lignin, the polyol and the isocyanate where added to a quantity of solvent (THF), the volume concentration in the solvent of the one or more sugars, the lignin, the polyol and the isocyanate, was calculated according to eq. 6.

EP 4 406 985 A1

$$C_{sol}(\%, w/v) = \frac{w_{sugars} + w_{lignin} + w_{polyol} + w_{isocyanate}}{V_{solvent}} \times 100 \ \text{(eq.6)}$$

Before application, THF was evaporated and a thin layer of a viscous LSPU solution was evenly spread on the one edge of the wood substrate. **Table 2,** here below, illustrates the compositions of 4 adhesives namely LSPUA1, LSPUA2, LSPUA3 and LSPUA4 obtained and tested according to the exemplified procedure.

**Table 1.** Compositions of LSPU adhesives

| # | Sample | $C_{lignin}$ (%, w/w) | $C_{sugar}$ (%, w/w) | $C_{polyol}$ (PTHF) (%, w/w) | $C_{isocyanate}$ (HDI trimer) (%, w/w) |
|---|--------|-----------|----------|------------------|--------------------------|
| 1 | LSPUA1 | 26.6 | 0.00 | 26.6 | 46.2 |
| 2 | LSPUA2 | 21.8 | 2.4 | 24.2 | 50.8 |
| 3 | LSPUA3 | 14.4 | 6.2 | 20.6 | 57.9 |
| 4 | LSPUA4 | 4.8 | 11.1 | 15.80 | 67.3 |
| Wherein in Table 1, $C_{lignin}$, $C_{sugar}$, $C_{polyol}$ and $C_{isocyanate}$ are calculated according to eq. 1. to eq. 4. | | | | | |

- **Characterization of lignin-sugars-based polyurethanes (LSPUA) adhesives**

Shear strength of LSPUA adhesives were assessed by single-lap shear tests using pine wood (Pinus sylvestris) as substrates. Pine wood veneers were cut into rectangular panels with a dimension of ca. 100 mm (L) $\times$ 25 mm (W) $\times$ 2 mm (T) and were polished with sand paper to enhance the permeability of the adhesives. Dust was removed from the samples using compressed air and the wood specimens were dried at 110 °C for 24 h before further use. The application amount of all PU solution on the overlapping joint is 0.64 mg/mm$^2$. A second similarly cut wood substrate was placed over the adhesive layer and the assembly was compressed in a hot press at 110 °C for 1 hour and then placed in a desiccator and allow to cool down for 12 hours without applying any pressure. Wood specimens of each type of PU formulation were prepared and the longitudinal tensile shear strength was evaluated by lap shear tensile strength using a universal testing machine (Instron 5582). The wood specimens were clamped by two screw-type flat-plate grips and pulled at a shear rate of 2 mm/min. For each PU composition, wood specimens were prepared in triplicate and the average lap shear strength was reported. **Fig. 4** displays the lap shear stress values of wood substrates bonded with lignin/sugars-based PU adhesives at various lignin and sugars compositions, illustrating the beneficial adhesive properties of polyurethanes according to the present invention.

**References**

1. Saffar, Thana, et al. "Production of bio-based polyol from oxypropylated pyrolytic lignin for rigid polyurethane foam application." Waste and Biomass Valorization 11.11 (2020): 6411-6427.

**Claims**

1. A multicomponent reactive polyurethane system comprising:

    - a isocyanate having two or more isocyanate groups;
    - a polyol, preferably a diol;
    - lignin; and
    - one or more sugars;

    wherein the one or more sugars comprise at least one methoxy group and at least one hydroxy group.

2. The system according to the previous claim, wherein the one or more sugars are present in the system at a concentration $C_{sugar}$, defined according to eq. 1

$$C_{sugar}(\%, w/w) = \frac{w_{sugar}}{w_{sugar}+w_{lignin}+w_{polyol}+w_{isocyanate}} \times 100 \quad \text{(eq.1)}$$

wherein $w_{sugar}$ corresponds to the sum of the weights the one or more sugars, $w_{lignin}$ corresponds to the weight of the lignin, $w_{isocyanate}$ corresponds to the sum of the weights the one or more isocyanates and $w_{polyol}$ corresponds to the sum of the weights the one or more polyols, wherein $C_{sugar}$ is from 1.0% w/w to 10.0% w/w.

3. The system according to any one of the previous claims, wherein the lignin is present in the system at a concentration $C_{lignin}$, defined according to eq. 2

$$C_{lignin}(\%, w/w) = \frac{w_{lignin}}{w_{sugar}+w_{lignin}+w_{polyol}+w_{isocyanate}} \times 100 \quad \text{(eq.2)}$$

wherein $w_{sugar}$ corresponds to the sum of the weights the one or more sugars, $w_{lignin}$ corresponds to the weight of the lignin, $w_{isocyanate}$ corresponds to the sum of the weights the one or more isocyanates and $w_{polyol}$ corresponds to the sum of the weights the one or more polyols, wherein $C_{lignin}$ is from 1.0% w/w to 15.0% w/w.

4. The system according to any one of claims 1 to 2, wherein the lignin is present in the system at a concentration $C_{lignin}$, defined according to eq. 2

$$C_{lignin}(\%, w/w) = \frac{w_{lignin}}{w_{sugar}+w_{lignin}+w_{polyol}+w_{isocyanate}} \times 100 \quad \text{(eq.2)}$$

wherein $w_{sugar}$ corresponds to the sum of the weights the one or more sugars, $w_{lignin}$ corresponds to the weight of the lignin, $w_{isocyanate}$ corresponds to the sum of the weights the one or more isocyanates and $w_{polyol}$ corresponds to the sum of the weights the one or more polyols, wherein $C_{lignin}$ is from 15.0% w/w to 30.0% w/w.

5. The system according to any one of the previous claims, wherein the lignin and the one or more sugars are provided as a methanolysis product of a lignocellulosic biomass.

6. The system according to any one of the previous claims, wherein the one or more sugars are selected from the list: methyl-pentopyranoside, methyl-D-gluconpyranoside, methyl-D-xylopyranoside, methyl 3-O-acetylpentopyranoside, dimethyl-4-O-methyl-hexanopyroside.

7. The system according to any one of the previous claims, further comprising a solvent, wherein the solvent preferably comprises an ether, preferably a cyclic ether, preferably tetrahydrofuran (THF).

8. The system according to the previous claim, wherein the one or more sugars, the one or more isocyanates, the lignin and the one or more polyols are present in the system at a concentration in volume respect to the solvent $C_{sol}$ defined according to eq. 6

$$C_{sol}(\%, w/v) = \frac{w_{sugars}+w_{lignin}+w_{polyol}+w_{isocyanate}}{V_{solvent}} \times 100 \quad \text{(eq.6)}$$

wherein $w_{sugar}$ corresponds to the sum of the weights the one or more sugars, $w_{lignin}$ corresponds to the weight of the lignin, $w_{isocyanate}$ corresponds to the sum of the weights the one or more isocyanates, $w_{polyol}$ corresponds to the sum of the weights the one or more polyols and $V_{solvent}$ corresponds to the volume of the solvent, wherein $C_{sol}$ is from 150 w/v % to 250 w/v %, preferably from 175 w/v % to 225 w/v %.

9. A multicomponent adhesive composition comprising the multicomponent polyurethane system according to any one of claims 1 to 8.

10. A polyurethane polymer comprising a crosslinked product of the multicomponent polyurethane system according to any one of claims 1 to 8.

**11.** The polymer according to claim 10, wherein the polymer is any one of a polymer film, a polymer sheet, a polymer foam, a polymer resin, preferably a polymer film, a polymer sheet or a polymer resin.

**12.** An article (e.g., coated article) comprising:

(a) a substrate; and
(b) a polyurethane polymer according to any one of claims 10 to 11 or a multicomponent adhesive according to any one of claim 9, coated on a surface of the substrate.

**13.** The article of claim 12, wherein the substrate is a material selected from: metal, plastics, glass, wood, fabric (or textile), composites, and ceramics.

**14.** The article according to any one of claims 12 to 13, further comprising an additional substrate, wherein:
the polyurethane polymer is also coated on a surface of the additional substrate, and the polyurethane polymer joins the substrate and the additional substrate together.

**15.** The article of claims 13 or 14, wherein at least one of the substrate and the additional substrate is wood.

**Fig. 1A**

**Fig. 1B**

**Fig. 2A**

**Fig. 2B**

**Fig. 3**

**Fig. 4**

Europäisches
Patentamt

European
Patent Office

Office européen
des brevets

## EUROPEAN SEARCH REPORT

Application Number

EP 23 15 3989

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 10 745 513 B1 (KURPLE KARL VINCENT [US]) 18 August 2020 (2020-08-18) * examples XIV, XV, XXIX, LIX * ----- | 1-15 | INV. C08G18/08 C08G18/24 C08G18/64 |
| A | CN 106 916 275 A (SUZHOU NABEITONG ENV TECH CO LTD) 4 July 2017 (2017-07-04) * examples 1-5 * ----- | 1-15 | C08G18/79 C09J175/04 C08G18/32 |

TECHNICAL FIELDS
SEARCHED          (IPC)

C08G
C09J

The present search report has been drawn up for all claims

| Place of search | Date of completion of the search | Examiner |
|---|---|---|
| Munich | 23 June 2023 | Sütterlin, Martin |

EPO FORM 1503 03.82 (P04C01)

**ANNEX TO THE EUROPEAN SEARCH REPORT
ON EUROPEAN PATENT APPLICATION NO.**

EP 23 15 3989

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2023

| Patent document cited in search report | | Publication date | Patent family member(s) | | Publication date |
|---|---|---|---|---|---|
| US 10745513 | B1 | 18-08-2020 | US | 9593221 B1 | 14-03-2017 |
| | | | US | 10745513 B1 | 18-08-2020 |
| CN 106916275 | A | 04-07-2017 | NONE | | |

EPO FORM P0459

For more details about this annex : see Official Journal of the European Patent Office, No. 12/82

**EP 4 406 985 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SAFFAR, THANA et al.** Production of bio-based polyol from oxypropylated pyrolytic lignin for rigid polyurethane foam application. *Waste and Biomass Valorization,* 2020, vol. 11 (11), 6411-6427